# FASCICULE DE BREVET EUROPEEN

(11) **EP 1 610 969 B1**
(45) Date de publication et mention de la délivrance du brevet: **27.01.2010**
(21) Numéro de dépôt: 04742464.3
(22) Date de dépôt: 08.04.2004
(51) Int. Cl.: B60J 7/20

(54) **SYSTEME DE PLAGE ARRIERE DE VEHICULE**
HUTABLAGEVORRICHTUNG EINES FAHRZEUGS
PARCEL SHELF SYSTEM FOR A VEHICLE

(30) Priorité: 10.04.2003 FR 0304496
(43) Date de publication de la demande: 04.01.2006
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirieres (FR)
(74) Mandataire: Lemoine, Jean-Sébastien
(86) Numéro de dépôt international: PCT/FR2004/000878
(87) Numéro de publication internationale: WO 2004/091976

(56) Documents cités:
- DE-A- 10 131 892
- US-A- 5 011 208
- US-A1- 2003 062 736
- PATENT ABSTRACTS OF JAPAN vol. 2003, no. 08, 6 août 2003 (2003-08-06) -& JP 2003 104129 A (TAKASHIMAYA NIPPATSU KOGYO CO LTD), 9 avril 2003 (2003-04-09)

## Description

La présente invention concerne un système de plage arrière pour véhicule, notamment pour automobile ayant un toit rigide repliable.

On connaît un système de plage arrière du type comportant, d'une part, un support adapté à être solidarisé à un dossier de siège qui délimite le coffre arrière d'un véhicule et qui est mobile entre une position normale dans laquelle le siège peut être occupé par une personne et une position basculée vers l'avant, et, d'autre part, un volet formé par un rideau souple rigidifié qui est mobile par rapport au support, d'une part, quand le dossier est dans sa position normale, entre une position rangée dans laquelle il est disposé de façon à libérer l'espace situé entre le dossier et le bord avant du capot du coffre, et une position sortie dans laquelle il recouvre cet espace, et, d'autre part, quand le dossier est dans sa position basculée vers l'avant, entre une position déployée dans laquelle il recouvre l'espace situé entre le bord avant du capot et le dossier et sa position rangée.

Un tel système est particulièrement bien adapté pour un véhicule possédant un toit rigide repliable mobile entre une position déployée dans laquelle il recouvre l'habitacle du véhicule, et une position pliée dans laquelle il est plié et rangé dans le coffre. Des moyens de synchronisation sont adaptés à activer des moyens de commande du mouvement du volet dans le sens de son entraînement dans sa position rangée quand le toit passe de l'une à l'autre de ses positions afin de permettre le passage du toit entre le dossier et le bord avant du capot.

Un tel système est par exemple décrit dans le brevet US 5 011 208. Toutefois, le volet en position déployée ne sert qu'à cacher le contenu du coffre arrière, et, paradoxalement, diminue considérablement l'espace de rangement dans le coffre arrière quand il est en position déployée, le dossier étant en position basculée vers l'avant.

Or, l'intérêt d'avoir un dossier mobile entre une position normale et une position basculée vers l'avant est d'augmenter le volume de rangement du coffre arrière, le volet en position déployée ne devant pas réduire ce volume.

La présente invention vise à pallier les inconvénients précités et à procurer au véhicule un système de plage arrière capable de recouvrir l'espace situé entre le dossier et le bord avant du capot, que le dossier soit dans sa position normale ou dans sa position basculée vers l'avant, et ceci sans limiter le volume de rangement du coffre arrière quand le dossier est dans sa position basculée vers l'avant.

Selon l'invention, le volet est monté coulissant dans des glissières de guidage qui sont solidaires de la carrosserie du véhicule, et qui sont adaptées à guider le volet quand il passe aussi bien de sa position rangée à sa position déployée que de sa position rangée à sa position sortie.

Ce système de plage arrière à trois positions permet ainsi de résoudre le problème. Quand le dossier est en position basculée vers l'avant, le volet peut recouvrir l'espace entre le dossier et le bord avant du capot du coffre arrière, ce qui permet de cacher le contenu du coffre arrière quelle que soit la position du dossier, sans diminuer le volume de rangement dans le coffre.

D'autres détails et avantages de la présente invention apparaîtront plus clairement dans la description du mode de réalisation donné à titre d'exemple non limitatif et illustré par les dessins annexés.
La figure 1 est une vue en coupe longitudinale qui représente schématiquement la partie arrière d'un véhicule, le volet étant en position sortie, le dossier étant en position normale ;
La figure 2 est une vue semblable à la figure 1, le volet étant en position rangée ;
La figure 3 est une vue semblable aux figures 1 et 2, le volet étant en position déployée, le dossier étant en position basculée vers l'avant ;
La figure 4 est une vue semblable à la figure 3, le volet étant en position rangée ;
La figure 5 est une vue en coupe longitudinale, selon la ligne V-V de la figure 4, d'un rail de guidage ; et
La figure 6 est une vue en coupe transversale, selon la ligne VI-VI de la figure 4, d'un rail de guidage.

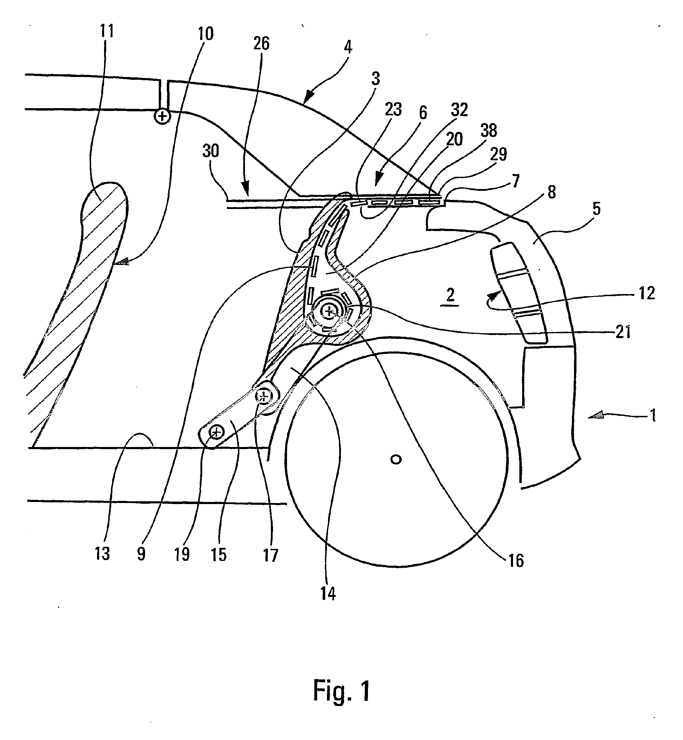

Comme on peut le voir à la figure 1, un véhicule 1 comprend un coffre arrière 2, un dossier 3 d'un siège délimitant le coffre arrière 2, et un toit 4 rigide et repliable d'un type quelconque.

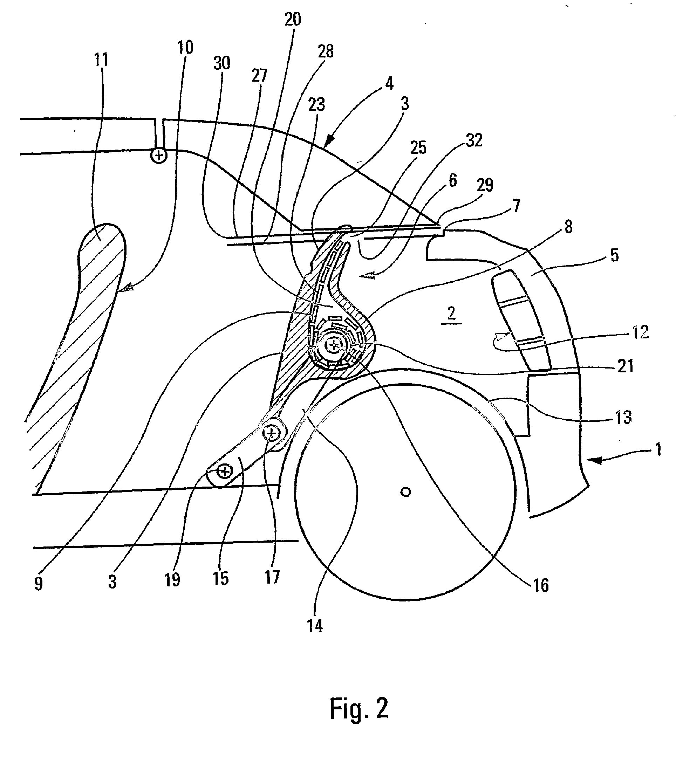

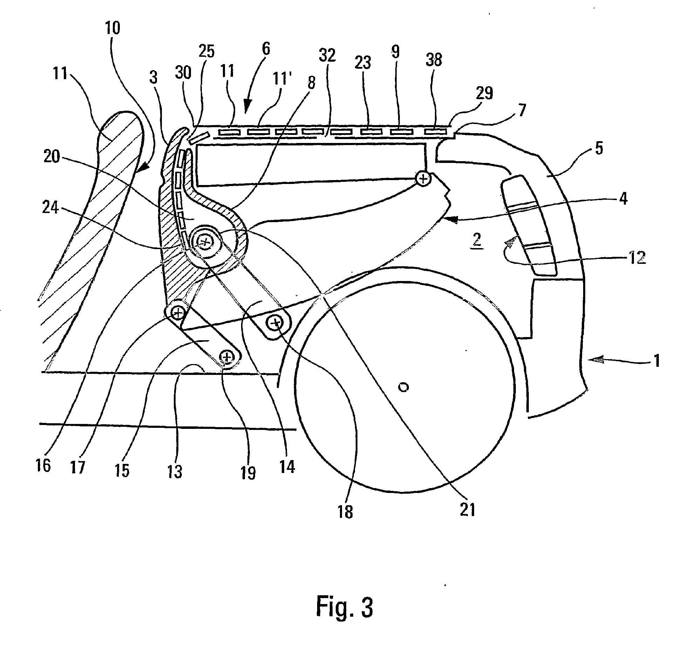

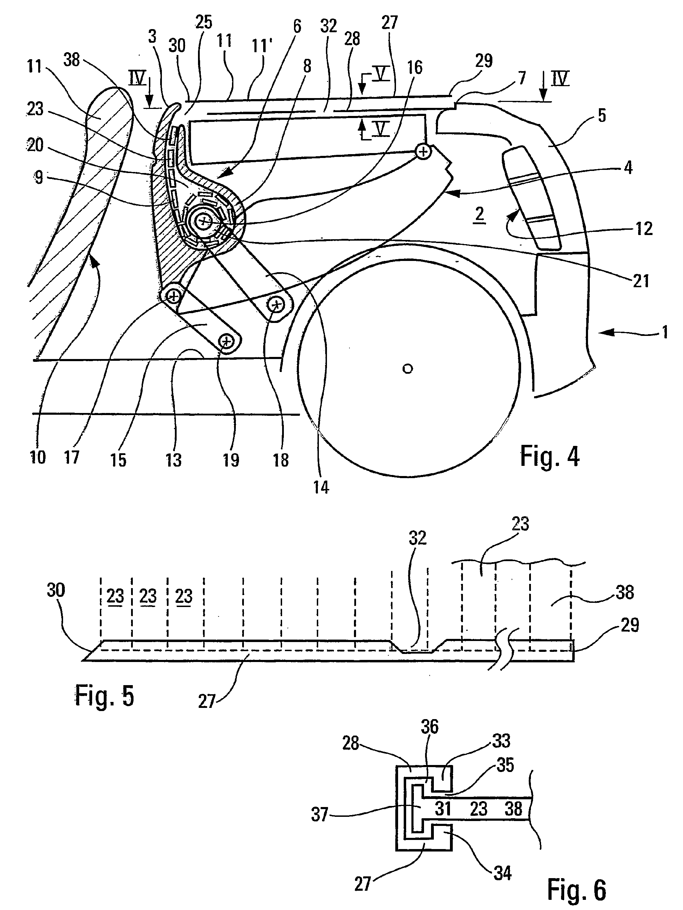

Le toit 4 est mobile entre une position déployée dans laquelle il recouvre l'habitacle du véhicule (figures 1 et 2), et une position pliée rangée dans laquelle il est plié dans le coffre arrière 2 (figures 3 et 4).

Dans le présent exemple, le coffre arrière 2 est fermé par un capot 5 mobile entre un position fermée et une position ouverte de l'avant vers l'arrière afin de permettre le rangement du toit 4 dans le coffre 2.

Le dossier 3 est mobile entre une position normale dans laquelle le siège peut être occupé par une personne (figures 1 et 2), et une position basculée vers l'avant dans laquelle le volume disponible pour le rangement du coffre arrière 2 est augmenté du fait de ce basculement.

Le véhicule comprend également un système de plage arrière 6 qui est destiné à recouvrir l'espace situé entre le bord avant 7 du capot 5 en position fermée et le dossier 3 en position normale, notamment afin de séparer le coffre arrière 2 du reste de l'habitacle du véhicule 1 et de cacher son contenu de l'extérieur.

Le système de plage arrière 6 comporte un support 8 qui est solidarisé au dossier 3, et un volet 9 qui est monté de façon mobile par rapport au support 8. Le volet 9 est mobile entre une position sortie dans laquelle il recouvre l'espace situé entre le dossier 3 en position normale et le bord avant 7 du capot 5, et une position rangée dans laquelle il est disposé de façon à libérer cet espace et à permettre le passage du toit entre le dossier 3 et le bord avant 7.

Dans le présent exemple, la dimension du coffre arrière 2 dans le sens longitudinal est insuffisante pour permettre le rangement du toit 4. Aussi, le véhicule 1 est conformé de sorte que, quand le dossier 3 est dans sa position basculée vers l'avant (en l'occurrence, quand il est disposé contre la face arrière 10 du dossier 11 situé devant lui) l'espace ainsi libéré permet le rangement du toit 2, c'est à dire que la distance séparant la paroi arrière 12 du coffre arrière 2 du dossier 3 en position basculée vers l'avant est supérieure à la longueur du toit 4 en position pliée rangée.

Le support 8 et le volet 9 sont conformés de sorte que, quand le dossier 3 est dans sa position basculée vers l'avant, le volet 9 est mobile entre sa position rangée et une position déployée dans laquelle il recouvre l'espace situé entre le bord avant 7 du capot 5 et le dossier 3 en position basculée. Ainsi, par cette conformation particulière le même volet 9 peut, d'une part, recouvrir intégralement l'espace entre le bord avant 7 du capot 5 et le dossier 3, que le dossier 3 soit en position normale ou en position basculée vers l'avant, et, d'autre part, libérer intégralement cet espace, notamment pour permettre le passage du toit 4, que le dossier 3 soit en position normale ou en position basculée vers l'avant.

Bien évidemment, le système de plage arrière 6 du véhicule comprend des moyens d'entraînement du volet 9, qui sont adaptés à entraîner le volet 9 dans un sens ou dans l'autre entre sa position rangée et l'une ou l'autre de ses deux positions sortie et déployée. De même, le véhicule comprend, d'une part, des moyens d'entraînement du dossier 3 de l'une à l'autre de ses positions (normale et basculée vers l'avant), et, d'autre part, des moyens d'entraînement du toit 4 de l'une à l'autre de ses positions (déployée et pliée rangée).

Dans le présent exemple, des moyens de synchronisation sont adaptés à commander les moyens d'entraînement du volet 9 dans le sens de son rangement quand le toit 4 passe de l'une à l'autre de ses positions. De même, les moyens de synchronisation sont adaptés à commander les moyens d'entraînement du dossier 3 dans le sens de son basculement vers l'avant quand le toit 4 passe de sa position déployée à sa position pliée rangée.

Le dossier 3 est articulé à la carrosserie 13, de chaque côté du véhicule 1, par deux bras de basculement 14,15 formant un parallélogramme déformable et agencés de telle sorte que le dossier 3 en position basculée vers l'avant est disposé le long de la face arrière 10 du dossier 11 du siège situé devant lui. Chaque bras de basculement 14,15 est monté pivotant, d'une part, par rapport au dossier 3, par sa première extrémité, selon un axe de pivotement respectif 16,17 s'étendant transversalement au véhicule 1, et, d'autre part, par rapport à la carrosserie 13, par sa deuxième extrémité, selon un axe de pivotement respectif 18,19 s'étendant transversalement au véhicule 1.

Dans le présent mode de réalisation, le support 8 forme un logement 20 dans lequel est disposé un tambour 21 mobile en rotation autour d'un axe de rotation s'étendant transversalement au véhicule 1. Le tambour 21 est entraîné en rotation, dans un sens ou dans l'autre, par les moyens d'entraînement du volet 9 (en l'occurrence, un moteur) fixé au support 8. Dans le présent exemple, l'axe de rotation est co-axial d'un des axes de pivotement.

Par ailleurs, le volet 9 est formé de lamelles rigides 23 qui s'étendent transversalement au véhicule 1, et est fixé, par son extrémité avant 24, au tambour 21. Les lamelles 23 sont reliées les unes aux autres par des moyens de liaison souple de sorte que le volet 9 puisse s'enrouler autour du tambour 21, dans le logement 20. A cet effet, le logement 20 comprend une fente de passage 25 orientée transversalement au véhicule 1 permettant le passage des lamelles 23 pendant le mouvement du volet 9 et disposée à proximité du bord supérieur du dossier 3.

De plus, des glissières de guidage 26 sont solidarisées à la carrosserie 13, de chaque côté du véhicule 1. les lamelles 23 sont montées coulissantes dans les glissières de guidage 26 qui sont disposées l'une en face de l'autre, de façon à permettre le guidage du volet 9.

Comme on peut le voir à la figure 5, chaque glissière de guidage 26 comprend deux parois longitudinales 27,28 disposées l'une au dessus de l'autre. Ces parois longitudinales 27,28 sont sensiblement horizontales et s'étendent entre une extrémité arrière 29 qui est située à proximité du bord avant 7 du capot 5 en position fermée, et une extrémité avant 30 qui est située à proximité du dossier 3 quand il est dans sa position basculée vers l'avant (et plus précisément à proximité de la fente de passage 25 quand le dossier 3 est dans sa position basculée vers l'avant). Ainsi, les bords transversaux 31 des lamelles 23 peuvent coulisser entre la paroi longitudinale supérieure 27 et la paroi longitudinale inférieure 28 de façon à guider le volet 9 quand il passe de sa position rangée à sa position déployée.

Par ailleurs, la paroi longitudinale inférieure 28 comprend une ouverture de passage 32 qui est située à proximité de la fente de passage 25 quand le dossier 3 est dans sa position normale. Ainsi, les bords transversaux 31 des lamelles 23 peuvent passer au travers de cette ouverture de passage 32 de façon à guider le volet 9 quand il passe de sa position rangée à sa position sortie.

Ainsi, comme on peut le voir aux figures 1 et 2, les glissières de guidage 26 qui s'étendent de part et d'autre de la face arrière du dossier 3 ne position normale, sont adaptées à guider le volet 9 aussi bien quand il passe de sa position rangée à sa position déployée que de sa position rangée à sa position sortie. Selon ce mode de réalisation, comme on peut le voir aux figures 1 et 3, les glissières de guidage 26 sont conformées de façon à permettre ce guidage sur l'ensemble de l'espace situé entre le dossier 3 et le bord avant du capot 7, quelle que soit la position du dossier 3.

Selon ce mode de réalisation, les moyens de synchronisation sont adaptés à commander le mouvement du volet 9 dans le sens du rangement préalablement à tout mouvement du dossier 3, de façon à éviter toute détérioration du volet 9 ou des glissières de guidage 26 dû au mouvement du dossier 3.

De plus, pour une même glissière de guidage 26, chaque paroi longitudinale 27,28 comprend, à son extrémité transversale libre, un rebord 33,34 sensiblement vertical qui s'étend en direction de l'autre paroi longitudinale 28,27. De ce fait, la glissière de guidage 26 comprend une fente de guidage 35 qui est délimitée par les deux rebords 33,34 et qui est adaptée à recevoir les bords transversaux 31 correspondants des lamelles 23, et un logement 36 qui est défini par les rebords 33,34 et les parois longitudinales 27,28, et qui est adapté à emprisonner, dans la direction transversale du véhicule 1, un galet 37 disposé à l'extrémité transversale 31 de la lamelle arrière 38 du volet 9.

Bien évidemment la présente invention n'est pas limitée au mode de réalisation décrit en détail ci-dessus.

Par exemple, le système de plage arrière pourrait être associé à un véhicule dont la longueur du coffre arrière est suffisante pour y permettre le rangement du toit plié, le basculement du dossier étant alors destiné essentiellement à augmenter l'espace de rangement des bagages. Il pourrait aussi être utilisé dans le même but dans un véhicule à toit fixe.

De même, le dossier pourrait être monté de manière pivotante, par sa base, par rapport à la carrosserie, selon un axe transversale au véhicule.

De même, le système de plage arrière pourrait être formé par un rideau en matière souple renforcée par des lamelles transversales rigides. Il pourrait aussi être constitué par au moins deux tablettes montées de manière télescopique l'une par rapport à l'autre, les deux tablettes étant en position rentrée lorsque le dossier est dans sa position normale, et en position déployée lorsque le siège est dans sa position basculée vers l'avant.

Bien évidemment, le coffre arrière pourrait être fermé par un capot mobile entre un position fermée et une position ouverte, de l'arrière vers l'avant afin de permettre l'introduction de bagages dans le coffre, et de l'avant vers l'arrière afin de permettre le rangement du toit dans le coffre.

## Revendications

1. Système de plage arrière (6) d'un véhicule (1), comportant, d'une part, un support (8) adapté à être solidarisé à un dossier (3) de siège qui délimite le coffre arrière (2) du véhicule (1) et qui est mobile entre une position normale dans laquelle le siège peut être occupé par une personne et une position basculée vers l'avant, et, d'autre part, un volet (9) formé par un rideau souple rigidifié qui est mobile par rapport au support (8), d'une part, quand le dossier (3) est dans sa position normale, entre une position rangée dans laquelle il est disposé de façon à libérer l'espace situé entre le dossier (3) et le bord avant (7) du capot (5) du coffre (2), et une position sortie dans laquelle il recouvre cet espace, et, d'autre part, quand le dossier (3) est dans sa position basculée vers l'avant, entre une position déployée dans laquelle il recouvre l'espace situé entre le bord avant (7) du capot (5) et le dossier (3) et sa position rangée, **caractérisé en ce que** le volet (9) est coulissant dans des glissières de guidage (26) qui sont solidaires de la carrosserie (13) du véhicule (1), et qui sont adaptées à guider le volet (9) quand il passe aussi bien de sa position rangée à sa position déployée que de sa position rangée à sa position sortie.

2. Système de plage arrière (6) selon la revendication 1, **caractérisé en ce que** le volet (9) est fixé, par son extrémité avant (24), à un tambour (21) monté en rotation autour d'un axe de rotation (22) transversal au véhicule de manière à permettre son enroulement autour du tambour (21) dans un logement (20) qui est formé par le support (8) et qui comprend une fente de passage (25) orientée transversalement au véhicule (1) pour le passage du rideau (9).

3. Système de plage arrière (6) selon la revendication 1 ou 2, **caractérisé en ce que** le rideau souple rigidifié est formé par des lamelles rigides (23) s'étendant transversalement au véhicule (1), reliées les unes aux autres par des moyens de liaison souple.

4. Système de plage arrière (6) selon la revendication 3, **caractérisé en ce que** chaque glissière (26) comprend deux parois longitudinales (27,28) sensiblement horizontales disposées l'une au dessus de l'autre, et entre lesquelles les bords transversaux (31) des lamelles (23) peuvent coulisser.

5. Système de plage arrière (6) selon les revendications 2 et 4, **caractérisé en ce que** chaque paroi longitudinale (27,28) s'étend entre une extrémité arrière (29) située à proximité du bord avant (7) du capot (5) en position fermée et une extrémité avant (30) située à proximité de la fente de passage (25) du dossier (3) en position basculée vers l'avant.

6. Système de plage arrière (6) selon la revendication 5, **caractérisé en ce que** la paroi longitudinale inférieure (28) comprend une ouverture de passage (32), au travers de laquelle les bords transversaux (31) des lamelles (23) peuvent passer, située à proximité de la fente de passage (25) du dossier (3) en position normale.

7. Système de plage arrière (6) selon l'une des revendications 4 à 6, **caractérisée en ce que** chaque paroi longitudinale (27,28) comprend, à son extrémité transversale libre, un rebord (33,34) sensiblement vertical s'étendant en direction de l'autre paroi longitudinale (28,27) de la même glissière (26), une fente de guidage (35) étant délimitée par les rebords (33,34) et adaptée à recevoir les bords transversaux (31) des lamelles (23), et un logement (36) étant défini par les rebords (33,34) et les parois longitudinales (27,28) et adapté à emprisonner transversalement un galet (37) disposé à l'extrémité transversale (31) de la lamelle arrière (38) du volet (9).

8. Système de plage arrière (6) selon l'une des revendications 1 à 7, **caractérisé en ce que** le dossier (3) est articulé à la carrosserie (13), de chaque côté du véhicule (1), par deux bras de basculement (14,15) formant un parallélogramme déformable et agencés de telle sorte que le dossier (3) en position basculée vers l'avant est disposé le long de la face arrière (10) du dossier (11) du siège situé devant lui.

9. Système de plage arrière (6) selon l'une des revendications 1 à 7, **caractérisé en ce qu'**il comprend des moyens d'entraînement du volet (9) adaptés à entraîner le volet (9) de l'une à l'autre de ses trois positions.

10. Système de plage arrière (6) selon la revendication 9, **caractérisé en ce qu'**il est associé à un véhicule (1) possédant un toit (4) rigide repliable mobile entre une position déployée dans laquelle il recouvre l'habitacle du véhicule, et une position pliée dans laquelle il est plié rangé dans le coffre (2), et **en ce que** des moyens de synchronisation sont adaptés à commander les moyens d'entraînement du volet (9) dans le sens de son rangement quand le toit (2) passe de l'une à l'autre de ses positions.

11. Système de plage arrière (6) selon la revendication 10, **caractérisé en ce qu'**il est associé à un véhicule (1) dont le coffre arrière (2) est de longueur insuffisante pour le rangement du toit (4), et **en ce que** les moyens de synchronisation sont adaptés à commander les moyens d'entraînement du dossier (3) dans le sens de son basculement vers l'avant quand le toit (4) passe de sa position déployée à sa position pliée rangée.

## Claims

1. Parcel shelf system (6) for a vehicle (1), comprising, on the one hand, a support (8) designed to be secured to a seat backrest (3), said backrest (3) defining the rear trunk (2) of the vehicle (1) and being movable between a normal position in which the seat can be occupied by a person and a forward tilted position, and, on the other hand, a panel (9) formed by a flexible reinforced curtain movable relative to the support (8), on the one hand, when the backrest (3) is in its normal position, between a stored position in which said panel is arranged so as to free the space between the backrest (3) and the front edge (7) of the hood (5) of the trunk (2) and a deployed position in which said panel covers said space, and, on the other hand, when the backrest (3) is in its forward tilted position, between an extended position in which it covers the space between the front edge (7) of the hood (5) and the backrest (3) and its stored position, **characterised in that** the panel (9) slides in guiding slides (26) which are joined to the body (13) of the vehicle (1), and which are designed to guide the panel (9) when its passes from its stored position into its extended position as well as from its stored position to its deployed position.

2. Parcel shelf system (6) according to claim 1, **characterised in that** the panel (9) is fixed at its front end (24) to a drum (21) mounted rotatably around an axis of rotation (22) transversely to the vehicle so as to allow it to wind around the drum (21) in a housing (20) which is formed by the support (8) and which comprises a slot (25) oriented transversely to the vehicle (1) for the passage of the curtain (9).

3. Parcel shelf system (6) according to claim 1 or 2, **characterised in that** the flexible reinforced curtain is formed by rigid laminae (23) extending transversally to the vehicle (1), connected to one another by flexible connecting means.

4. Parcel shelf system (6) according to claim 3, **characterised in that** each slide (26) comprises two longitudinal walls (27, 28) arranged substantially horizontally one above the other and between which the transverse edges (31) of the laminae (23) can slide.

5. Parcel shelf system (6) according to claims 2 and 4, **characterised in that** each longitudinal wall (27, 28) extends between a rear end (29) located close the front edge (7) of the hood (5) when said hood (5) is in a closed position, and a front end (30) located close to the slot (25) of the backrest (3), when said backrest (3) is in its forward tilted position.

6. Parcel shelf system (6) according to claim 5, **characterised in that** the lower longitudinal wall (28) comprises a passage opening (32), through which the transverse edges (31) of the laminae (23) can pass, which is located close to the slot (25) of the backrest (3) when said backrest (3) is in its normal position.

7. Parcel shelf system (6) according to one of claims 4 to 6, **characterised in that** each longitudinal wall (27, 28) comprises at its free transverse end, a substantially vertical flange (33, 34) extending in the direction of the other longitudinal wall (28, 27) of the same slide (26), a guiding slot (35) being defined by the flanges (33, 34) and designed to receive the transverse edges (31) of the laminae (23), and a housing (36) being defined by the flanges (33, 34) and longitudinal walls (27, 28) and designed to enclose transversely a roller (37) arranged at the transverse end (31) of the rear lamina (38) of the panel (9).

8. Parcel shelf system (6) according to one of claims 1 to 7, **characterised in that** the backrest (3) is articulated to the body (13) on either side of the vehicle (1) by two tilting arms (14, 15) forming a deformable parallelogram and arranged such that the backrest (3) in its forward tilted position is arranged along the rear face (10) of the backrest (11) of the seat located in front of it.

9. Parcel shelf system (6) according to one of claims 1 to 7, **characterised in that** it comprises driving means for driving the panel (9) from one of its three positions to another.

10. Parcel shelf system (6) according to claim 9, **characterised in that** it is associated with a vehicle (1) with a folding rigid roof (4) moving between an unfolded position in which it covers the interior of the vehicle and a folded position in which it is folded and stored in the trunk (2), and **in that** synchronisation means are designed to command the panel driving means in the direction of the storage of the panel (9) when the roof (2) passes from one of its positions to the other.

11. Parcel shelf system (6) according to claim 10, **characterised in that** it is associated with a vehicle (1), the rear trunk (2) of which is not long enough for storing the roof (4), and **in that** the synchronisation means are designed to command the backrest driving means in the direction of the forward tilting of the backrest (3) when the roof (4) passes from its unfolded position into its folded and stored position.

## Patentansprüche

1. Hinter dem Rücksitz eines Fahrzeugs (1) angeordnetes Ablagesystem (6), insbesondere Hutablagesystem, umfassend einerseits einen Träger (8) zum Befestigen an einer Sitzlehne (3), die den rückwärtigen Kofferraum (2) des Fahrzeuges (1) begrenzt und die zwischen einer Normalstellung, in der eine Person den Sitz einnehmen kann, und einer nach vorne gekippten Stellung beweglich ist, und andererseits eine aus einem versteiften, biegsamen Vorhang gebildete Blende (9), die gegenüber dem Träger (8) einerseits, wenn die Lehne (3) in deren Normalstellung ist, zwischen einer eingefahrenen Stellung, in der die Blende so angeordnet ist, dass sie den Raum zwischen der Lehne (3) und der Vorderkante (7) des Deckels (5) des Kofferraumes (2) freigibt, und einer ausgefahrenen Stellung, in der sie diesen Raum bedeckt, beweglich ist, und andererseits, wenn die Lehne (3) in deren nach vorne gekippter Stellung ist, zwischen einer ausgebreiteten Stellung, in der sie den Raum zwischen der Vorderkante (7) des Deckels (5) und der Lehne (3) bedeckt, und ihrer eingefahrenen Stellung beweglich ist, **dadurch gekennzeichnet, dass** die Blende (9) in Führungsschienen (26) gleitet, welche mit der Karosserie (13) des Fahrzeuges (1) fest verbunden sind und die dazu gestaltet sind, die Blende (9) zu führen, wenn sie sowohl aus ihrer eingefahrenen Stellung in ihre ausgebreitete Stellung als auch aus ihrer eingefahrenen Stellung in ihre ausgefahrene Stellung verfährt.

2. Ablagesystem (6) nach Anspruch 1, **dadurch gekennzeichnet, dass** die Blende (9) mit ihrem vorderen Ende (24) an einer Rolle (21) befestigt ist, welche drehbar und quer zum Fahrzeug um eine Rotationsachse (22) gelagert ist, so dass ihr Aufrollen um die Rolle (21) in einem Aufnahmeraum (20) ermöglicht ist, welcher durch den Träger (8) gebildet ist und einen quer zum Fahrzeug (1) gerichteten Durchgangsspalt (25) für den Durchgang des Vorhanges (9) umfasst.

3. Ablagesystem (6) nach einem der Ansprüche 1 oder 2, **dadurch gekennzeichnet, dass** der versteifte, biegsame Vorhang aus steifen Lamellen (23) gebildet ist, die sich quer zum Fahrzeug (1) erstrecken und miteinander durch flexible Verbindungsmittel verbunden sind.

4. Ablagesystem (6) nach Anspruch 3, **dadurch gekennzeichnet, dass** jede Führungsschiene (26) zwei längs verlaufende Wandungen (27, 28) umfasst, die im Wesentlichen horizontal angeordnet sind und eine über der anderen liegen, und zwischen denen die transversalen Ränder (31) der Lamellen (23) gleiten können.

5. Ablagesystem (6) nach den Ansprüchen 2 und 4, **dadurch gekennzeichnet, dass** sich jede längs verlaufende Wandung (27, 28) zwischen einem hinteren Ende (29) in der Nähe der Vorderkante (7) des Deckels (5) in Schließstellung und einem vorderen Ende (30) in der Nähe des Durchgangsspalts (25) der Lehne (3) in nach vorne gekippter Stellung erstreckt.

6. Ablagesystem (6) nach Anspruch 5, **dadurch gekennzeichnet, dass** die untere, längs verlaufende Wandung (28) eine Durchgangsöffnung (32) umfasst, durch die die transversalen Ränder (31) der Lamellen (23) hindurchgehen können, und die sich in der Nähe des Durchgangsspalts (25) der Lehne (3) in Normalstellung befindet.

7. Ablagesystem (6) nach einem der Ansprüche 4 bis 6, **dadurch gekennzeichnet, dass** jede längs verlaufende Wandung (27, 28) an deren freiem, transversalem Ende eine im Wesentlichen vertikale Umrandung (33, 34) umfasst, die sich in Richtung der anderen längs verlaufenden Wandung (28, 27) der gleichen Führungsschiene (26) erstreckt, wobei ein Führungsspalt (35) zur Aufnahme der transversalen Ränder (31) der Lamellen (23) durch die Umrandungen (33, 34) begrenzt ist, und durch die Umrandungen (33, 34) und die längs verlaufenden Wandungen (27, 28) eine Umfassung (36) zum transversalen Festsetzen einer am transversalen Ende (31) der hinteren Lamelle (38) der Blende (9) befindlichen Laufrolle (37) definiert ist.

8. Ablagesystem (6) nach einem der Ansprüche 1 bis 7, **dadurch gekennzeichnet, dass** an beiden Seiten des Fahrzeuges (1) die Lehne (3) über zwei ein verformbares Parallelogramm bildende Schwenkarme an der Karosserie (13) angelenkt ist (14, 15), welche derart angeordnet sind, dass die Lehne (3) in der nach vorne gekippten Stellung entlang der Rückseite (10) der Lehne (11) des sich vor ihr befindlichen Sitzes angeordnet ist.

9. Ablagesystem (6) nach einem der Ansprüche 1 bis 7, **dadurch gekennzeichnet, dass** es Antriebseinrichtungen der Blende (9) umfasst, zum Antreiben der Blende (9) von einer zur anderen derer drei Stellungen.

10. Ablagesystem (6) nach Anspruch 9, **dadurch gekennzeichnet, dass** es zu einem Fahrzeug (1) mit einem steifen Dach (4) gehört, welches faltbar ist und zwischen einer ausgebreiteten Stellung, in der es die Kabine des Fahrzeuges bedeckt, und einer gefalteten Stellung, in der es gefaltet im Kofferraum (2) aufgeräumt ist, beweglich ist, und dass Synchronisationseinrichtungen vorgesehen sind zum Betreiben der Antriebseinrichtungen der Blende (9) in Richtung deren Einfahrens, wenn das Dach (2) von der einen zur anderen dessen beider Stellungen verfährt.

11. Ablagesystem (6) nach Anspruch 10, **dadurch gekennzeichnet, dass** es zu einem Fahrzeug (1) gehört, dessen rückseitiger Kofferraum (2) nicht lang genug ist zum Einräumen des Daches (4), und dass die Synchronisationseinrichtungen dazu dienen, die Antriebseinrichtungen der Lehne (3) in Richtung deren Vorwärtskippens zu betreiben, wenn das Dach (4) aus dessen ausgebreiteter Stellung in dessen gefaltete, eingefahrene Stellung verfährt.
